(19) Europäisches Patentamt
European Patent Office
Office européen des brevets

(11) EP 2 557 096 B1

(12) **EUROPEAN PATENT SPECIFICATION**

(45) Date of publication and mention of the grant of the patent:
**09.04.2014 Bulletin 2014/15**

(51) Int Cl.:
***C08F 210/06*** *(2006.01)*

(21) Application number: **11176981.6**

(22) Date of filing: **09.08.2011**

# (54) Soft propylene copolymer

Weiches Propylencopolymer

Copolymère de propylène souple

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.02.2013 Bulletin 2013/07**

(73) Proprietor: **Borealis AG**
**1220 Vienna (AT)**

(72) Inventors:
- **Gahleitner, Markus**
  **4501 Neuhofen/Krems (AT)**
- **Bernreitner, Klaus**
  **4010 Linz (AT)**
- **Sandholzer, Martina**
  **4030 Linz (AT)**
- **Horill, Thomas**
  **2201 Gerasdorf (AT)**

(74) Representative: **Lux, Berthold et al**
**Maiwald Patentanwalts GmbH**
**Elisenhof**
**Elisenstraße 3**
**80335 München (DE)**

(56) References cited:
**EP-A1- 2 319 885**
**EP-A1- 2 546 298**
**WO-A1-2010/149549**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention is directed to a new soft propylene copolymer as well as to its manufacture.

Polymers are increasingly used in different demanding applications. At the same time there is a continuous seek for tailored polymers which meet the requirements of these applications. The demands can be challenging, since many polymer properties are directly or indirectly interrelated. For instance, heterophasic systems are known for its good impact behavior. Such heterophasic propylene copolymers comprise a matrix being either a propylene homopolymer or a random propylene copolymer in which an elastomeric copolymer is dispersed. Thus the polypropylene matrix contains (finely) dispersed inclusions being not part of the matrix and said inclusions contain the elastomeric copolymer. The term inclusion indicates that the matrix and the inclusion form different phases within the heterophasic propylene copolymer, said inclusions are for instance visible by high resolution microscopy, like electron microscopy or scanning force microscopy.

A specific soft heterophasic propylene copolymer is described in WO 2008/141934 A1. This heterophasic propylene copolymer has a rather low melting temperature, which is detrimental in view of sterilization.

However in the field of packaging soft materials with good optical properties are required, which remain on a high level after sterilization.

Further under commercial aspects the polymer produced should have enhanced flowability. High flowability reduces the risk of clogging in transfer lines and also improves the operational process.

Document EP 2 319 885 A1 discloses a propylene composition comprising a propylene matrix which is preferably a random propylene copolymer, and an ethylene/propylene rubber phase. The XCS fraction is 15-45 wt.%. This fraction has preferably an ethylene content of 13-17 wt.% and an IV of 1 to 2.5 dl/g. The composition has a MFR of at least 1 and a Tm of 133 to 150°C. The heterophasic composition is prepared in a multistage process. The total comonomer content is not higher than the one of the XCS fraction.

Document WO 2010/149549 A1 discloses a heterophasic copolymer HPP-1 which comprises a matrix and an elastomeric phase and with a comonomer content of 8 to 30 wt.% and a XCS of 15 to 40 wt.%. The MFR is preferably between 12 and 25 g/10 min. The XCS fraction may have an IV of 2.5 dl/g. The polymer is prepared in a multistage process in which a Ziegler catalyst may be used, with an internal donor such as a phthalate and an external donor such as a silane.

Accordingly it is the object of the present invention to provide a soft heterophasic propylene copolymer with good optical properties in particular after sterilization. Further the heterophasic propylene copolymer shall show temperature resistance and good flowability.

The finding of the present invention is to provide a heterophasic propylene copolymer with rather high comonomer content and xylene cold soluble (XCS) content, wherein the xylene cold soluble fraction is featured by an exceptional high propylene content.

Accordingly, the present invention is directed to a propylene copolymer having

(a) a xylene cold soluble content (XCS) determined according ISO 16152 (25 °C) in the range of 35 to 55 wt.-%,
(b) a comonomer content in the range of 8.0 to 17.0 wt.-%,

wherein further the propylene copolymer fulfills inequation (I)

$$\frac{Co\ (total)}{Co\ (XCS)} \geq 1.0$$

wherein

Co (total) is the comonomer content [wt.-%] of the propylene copolymer,
Co (XCS) is the comonomer content [wt.-%] of the xylene cold soluble fraction (XCS) of the propylene copolymer.

Preferably the comonomer content of xylene cold soluble (XCS) fraction of the propylene copolymer according to the first embodiment is in the range of 4.0 to 15.0 wt.-%.

It has surprisingly been found that such propylene copolymer has a low flexural modulus, high melting temperature, high flowability and good optical properties before and after sterilization.

In the following the first and second embodiment is defined in more detail together.

The propylene copolymer comprises apart from propylene also comonomers. Preferably the propylene copolymer comprises apart from propylene ethylene and/or $C_4$ to $C_{12}$ $\alpha$-olefins. Accordingly the term "propylene copolymer" according to this invention is understood as a polypropylene comprising, preferably consisting of, units derivable from

(a) propylene
and

(b) ethylene and/or $C_4$ to $C_{12}$ $\alpha$-olefins.

Thus the propylene copolymer according to this invention comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymer according to this invention comprises, especially consists of, monomers copolymerizable with propylene from the group consisting of ethylene, 1-butene and 1-hexene. More specifically the propylene copolymer of this invention comprises - apart from propylene - units derivable from ethylene and/or 1-butene. In a preferred embodiment the propylene copolymer according to this invention comprises units derivable from ethylene and propylene only.

Additionally it is appreciated that the propylene copolymer preferably has a rather high total comonomer content which contributes to the softness of the material. Thus it is required that the comonomer content of the propylene copolymer is at least 8.0 wt.-%, preferably in the range of 8.0 to 17.0 wt.-%, more preferably in the range of 8.0 to 15.0 wt.-%, yet more preferably in the range of 9.0 to 14.0 wt.-%, still more preferably in the range of 9.5 to 13.5 wt.-%.

The propylene copolymer of the instant invention can be further defined by the amount of comonomers within the xylene cold soluble (XCS) fraction versus the comonomer content of the total propylene copolymer. The xylene cold soluble (XCS) fraction of the instant invention is determined according to ISO 16152 (25 °C). Accordingly it is preferred that the propylene copolymer fulfills inequation (I), more preferably inequation (Ia), yet more preferably inequation (Ib), still more preferably inequation (1c), still yet more preferably inequation (Id),

$$\frac{Co\ (total)}{Co\ (XCS)} \geq 1.0, \qquad (I),$$

$$\frac{Co\ (total)}{Co\ (XCS)} \geq 1.3, \qquad (Ia)$$

$$2.0 \geq \frac{Co\ (total)}{Co\ (XCS)} \geq 1.2, \ (Ib)$$

$$1.9 \geq \frac{Co\ (total)}{Co\ (XCS)} \geq 1.3, \ (Ic)$$

$$1.8 \geq \frac{Co\ (total)}{Co\ (XCS)} \geq 1.4, \ (Id)$$

wherein

Co (total) is the comonomer content [wt.-%] of the propylene copolymer
Co (XCS) is the comonomer content [wt.-%] of the xylene cold soluble fraction (XCS) of the propylene copolymer.

Accordingly it is preferred that the comonomer content in the xylene cold soluble fraction (XCS) of the propylene copolymer is rather moderate. Thus it is appreciated that the comonomer content of the xylene cold soluble fraction (XCS) of the propylene copolymer is equal or below 15.0 wt.-%, more preferably in the range of 4.0 to 15.0 wt.-%, yet more preferably in the range of 5.0 to 13.0 wt.-%, still more preferably in the range of 5.5 to 10.0 wt.-%, still yet more preferably in the range of 6.0 to 9.0 wt.-%.

Concerning the comonomers present in the xylene cold soluble fraction (XCS) it is referred to the information provided for the propylene copolymer. Accordingly in a specific embodiment the xylene cold soluble fraction (XCS) comprises, especially consists of, monomers copolymerizable with propylene from the group consisting of ethylene, 1-butene and 1-hexene. More specifically the xylene cold soluble fraction (XCS) comprises - apart from propylene - units derivable from ethylene and/or 1-butene. In a preferred embodiment the xylene cold soluble fraction (XCS) comprises units derivable from ethylene and propylene only.

Another characteristic feature of the instant propylene copolymer is its rather high xylene cold soluble (XCS) fraction. Accordingly it is appreciated that the propylene copolymer has a xylene cold soluble fraction of at least 35 wt.-%, more preferably in the range of 35 to 55 wt.-%, yet more preferably in the range of 35 to 50 wt.-%, still yet more preferably in the range of 36 to 49 wt.-%.

Further it is appreciated that the xylene cold soluble (XCS) fraction of the propylene copolymer is specified by its intrinsic viscosity. A low intrinsic viscosity (IV) value reflects a low weight average molecular weight. For the present invention it is required that the xylene cold soluble fraction (XCS) of propylene copolymer has an intrinsic viscosity (IV) measured according to ISO 1628/1 (at 135 °C in decalin) of equal or below 2.8 dl/g, more preferably of in the range of 1.2 to below 2.8 dl/g, still more preferably in the range of 1.2 to 2.3 dl/g, still yet more preferably like in the range of 1.5 to below 2.2 dl/g.

Preferably it is desired that the propylene copolymer is thermo mechanically stable, so that for instance a thermal sterilization process can be accomplished. Accordingly it is appreciated that the propylene copolymer has a melting temperature of at least 145 °C, more preferably in the range of 145 to 160 °C, still more preferably in the range of 150 to 159 °C, like in the range of 151 to 159 °C.

The stepwise isothermal segregation technique (SIST) provides a possibility to determine the softening and melting temperature range. The precise measuring method is specified in the example section. Thereby rather high amounts (rather high melt enthalpy [J/g]) of polymer fractions crystallizing at high temperatures indicate a rather high amount of high melting material. Thus it is appreciated that the propylene copolymer of the instant invention comprises at least 20.0 wt.-%, more preferably at least 25.0 wt-%, still more preferably in the range of 20.0 to 40.0 wt.-%, yet more preferably in the range of 25.0 to 38.0 wt.-%, still yet more preferably in the range of 28.0 to 35.0 wt.-%, of a crystalline fraction melting in a stepwise isothermal segregation technique analysis (SIST) equal or above 150°C, preferably in the range of equal or above 150 to 160 °C.

Additionally it is appreciated that the propylene copolymer comprises not more than 25.0 wt.-%, more preferably not more than 22.0 wt.-%, yet more preferably in the range of 12.0 to 25.0 wt.-%, like in the range of 15.0 to 22.0 wt.-%, of a crystalline fraction melting in a SIST analysis in the range from 140 to below 150°C.

The propylene copolymer according to this invention can be provided in a broad molecular weight range. Accordingly the propylene copolymer has a melt flow rate $MFR_2$ (230 °C) in the range of 0.5 to 15.0 g/10min.

In one embodiment the melt flow rate $MFR_2$ (230 °C) of the propylene copolymer is in the range of 0.5 to 1.9 g/10min, like 0.5 to 1.5 g/10min. In such a case

(a) the xylene cold soluble fraction (XCS) of the propylene copolymer preferably has an intrinsic viscosity (IV) measured according to ISO 1628/1 (at 135 °C in decalin) of equal or below 2.8 dl/g, more preferably in the range of 1.5 to below 2.8 dl/g, still more preferably in the range of 1.8 to below 2.6 dl/g, yet more preferably like in the range of 2.0 to 2.5 dl/g, and/or
(b) the xylene cold soluble fraction (XCS) of the propylene copolymer preferably is at least 35 wt.-%, more preferably in the range of 35 to 55 wt.-%, yet more preferably in the range of 35 to 50 wt.-%, still yet more preferably in the range 38 to 50 wt.-%.

In another more preferred embodiment the propylene copolymer of this invention has a melt flow rate $MFR_2$ (230 °C) in the range of 2.0 to 15.0 g/10 min, more preferably in the range of 2.5 to 12.0 g/10min. This enhanced melt flow rate is obtained by visbreaking the propylene copolymer discussed in the previous paragraph. In such a case

(a) the xylene cold soluble fraction (XCS) of the propylene copolymer preferably has an intrinsic viscosity (IV) measured according to ISO 1628/1 (at 135 °C in decalin) of equal or below 2.5 dl/g, more preferably of in the range of, still more preferably in the range of 1.2 to 2.3 dl/g, still yet more preferably like in the range of 1.5 to below 2.0 dl/g. and/or
(b) the xylene cold soluble fraction (XCS) of propylene copolymer preferably is at least 35 wt.-%, more preferably in the range of 35 to 55 wt.-%, yet more preferably in the range of 35 to 50 wt.-%, still yet more preferably in the range 38 to 49 wt.-%.

The instant propylene copolymer is especially further featured by its specific optical and mechanical properties. The following properties apply in particular in case the propylene copolymer has been visbroken, i.e. the propylene copolymer has a melt flow rate as defined in the previous paragraph (2.0 to 15.0 g/10 min).

Accordingly it is preferred that the propylene copolymer has a flexural modulus measured according to ISO 178 of not more than 350 MPa, more preferably in the range of 100 to 350 MPa, more preferably in the range of 150 to 320 MPa, most preferably in the range of 200 to 310 MPa.

With regard to the optical properties it is preferred that the propylene copolymer has

(a) a haze before sterilization determined according to ASTM D 1003-07 of below 35 %, more preferably 15 to below 35 %, yet more preferably 20 to 33 %,
and/or
(b) a haze after sterilization determined according to ASTM D 1003-07 of below 55 %, more preferably 25 to below 55 %, yet more preferably 35 to 50 %.

As indicated above, the instant propylene copolymer is featured by a rather high amount of a xylene cold soluble (XCS) fraction. On the other hand the propylene copolymer is also preferably featured by a rather high amount of a crystalline fraction melting at high temperature. Accordingly the instant propylene copolymer is a mixture of a crystalline polymer and amorphous material. Such type of polymer is classified as heterophasic propylene copolymer. A heterophasic propylene copolymer comprises a polymer matrix, like a (semi)crystalline polypropylene, in which the amorphous material, like an elastomeric propylene copolymer, is dispersed. Thus in a preferred embodiment the instant propylene copolymer is heterophasic propylene copolymer (RAHECO). More precisely the instant propylene copolymer is heterophasic propylene copolymer (RAHECO) comprising a matrix (M) being a random propylene copolymer (R-PP) and dispersed therein an elastomeric propylene copolymer (E). Thus the matrix (M) contains (finely) dispersed inclusions being not part of the matrix (M) and said inclusions contain the elastomeric propylene copolymer (E). The term inclusion indicates that the matrix (M) and the inclusion form different phases within the heterophasic propylene copolymer (RAHECO), said inclusions are for instance visible by high resolution microscopy, like electron microscopy or scanning force microscopy.

Preferably the heterophasic propylene copolymer (RAHECO) according to this invention comprises as polymer components only the random propylene copolymer (R-PP) and the elastomeric propylene copolymer (E). In other words the heterophasic propylene copolymer (RAHECO) may contain further additives but no other polymer in an amount exceeding 5 wt-%, more preferably exceeding 3 wt.-%, like exceeding 1 wt.-%, based on the total heterophasic propylene copolymer (RAHECO). One additional polymer which may be present in such low amounts is a polyethylene which is a by-reaction product obtained by the preparation of heterophasic propylene copolymer (RAHECO) (see in detail below). Accordingly it is in particular appreciated that the instant heterophasic propylene copolymer (RAHECO) contains only the random propylene copolymer (R-PP), the elastomeric propylene copolymer (E) and optionally polyethylene in amounts as mentioned in this paragraph.

Preferably the weight ratio between the matrix (M), i.e. the random propylene copolymer (R-PP), and the elastomeric propylene copolymer (E) is 50/50 to 80/20, more preferably 60/40 to 77/23, yet more preferably 62/38 to 75/25.

In the following the random propylene copolymer (R-PP) and the elastomeric propylene copolymer (E) are defined more precisely.

The random propylene copolymer (R-PP) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer (R-PP) according to this invention comprises, especially consists of, monomers copolymerizable with propylene from the group consisting of ethylene, 1-butene and 1-hexene. More specifically the random propylene copolymer (R-PP) of this invention comprises - apart from propylene - units derivable from ethylene and/or 1-butene. In a preferred embodiment the random propylene copolymer (R-PP) comprises units derivable from ethylene and propylene only.

The comonomer content of the random propylene copolymer (R-PP) is at least 4.0 wt.-%, more preferably at least 6.0 wt.-%, still more preferably in the range of 4.0 to 15.0 wt.-%, yet more preferably in the range of 6.0 to 12.0 wt.-%, still more preferably in the range of 7.0 to 11.0 wt.-%, like in the range of 7.8 to 10.0 wt.-%.

Further it is appreciated that the propylene copolymer fulfills inequation (II), more preferably inequation (IIa), yet more preferably inequation (IIb), still more preferably inequation (IIc), still yet more preferably inequation (IId),

$$\frac{Co\ (total)}{Co\ (RPP)} \geq 0.9, \qquad \text{(II)}$$

$$\frac{Co\ (total)}{Co\ (RPP)} \geq 1.0, \qquad \text{(IIa)}$$

$$2.0 \geq \frac{Co\ (total)}{Co\ (RPP)} \geq 0.9, \ \text{(IIb)}$$

$$1.9 \geq \frac{Co\ (total)}{Co\ (RPP)} \geq 1.0, \text{(IIc)}$$

$$1.7 \geq \frac{Co\ (total)}{Co\ (RPP)} \geq 1.1, \text{(IId)}$$

wherein

Co (total) is the comonomer content [wt.-%] of the propylene copolymer,
Co (RPP) is the comonomer content [wt.-%] of the random propylene copolymer (R-PP).

The term "random" indicates that the comonomers of the random propylene copolymer (R-PP), as well as of the first propylene copolymer fraction (R-PP 1) and the second propylene copolymer fraction (R-PP2) are randomly distributed within the propylene copolymers. The term random is understood according to IUPAC (Glossary of basic terms in polymer science; IUPAC recommendations 1996).

Due to the rather high comonomer content of the matrix (M), i.e. of the random propylene copolymer (R-PP), the matrix (M) has a considerable amount of xylene cold solubles. Thus it is preferred that the amount of the xylene cold soluble (XCS) fraction of the matrix (M), i.e. of the random propylene copolymer (R-PP), is equal or more than 20.0 wt.-%, more preferably is in the range of 20.0 to 45.0 wt.-%, still more preferably is in the range of 25.0 to 43.wt.-%, yet more preferably is in the range of 30.0 to 42.0 wt.-%.

The random propylene copolymer (R-PP) preferably has a melt flow rate $MFR_2$ (230 °C) in the range of 0.3 to 15.0 g/10min. In one embodiment the melt flow rate $MFR_2$ (230 °C) of the random propylene copolymer (R-PP) is in the range of 0.3 to 5.0 g/10min, preferably in the range of 0.3 to 1.9 g/10min, like in the range of 0.5 to 1.5 g/10min. In another more preferred embodiment the random propylene copolymer (R-PP) has a melt flow rate $MFR_2$ (230 °C) in the range of 2.0 to 15.0 g/10 min, more preferably in the range of 2.5 to 15.0 g/10min.

The random propylene copolymer (R-PP) preferably comprises at least two polymer fractions, like two or three polymer fraction, all of them are propylene copolymers. Even more preferred the random propylene copolymer (R-PP) comprises, preferably consists of, a first propylene copolymer fraction (R-PP 1) and a second propylene copolymer fraction (R-PP2). It is preferred that the first propylene copolymer fraction (R-PP 1) is the comonomer lean fraction whereas the second propylene copolymer fraction (R-PP2) is the comonomer rich fraction.

Thus it is preferred that the first random propylene copolymer fraction (R-PP1) has a comonomer content of equal or below 5.0 wt.-%, more preferably of equal or below 4.0 wt.-%, yet more preferably in the range 0.5 to 5.0 wt.-%, still more preferably in the range 0.5 to 4.0 wt.-%, like in the range of 1.0 to 3.5 wt.-%.

As the comonomer of the first random propylene copolymer fraction (R-PP1) preferably is rather low, also its xylene cold soluble (XCS) is comparably low. Thus it is preferred that the amount of the xylene cold soluble (XCS) fraction of the first random propylene copolymer fraction (R-PP1) is equal or below than 12.0 wt.-%, more preferably is in the range of 3.0 to 12.0 wt.-%, still more preferably is in the range of 4.0 to 11.0 wt.-%, yet more preferably is in the range of 5.0 to 10.0 wt.-%.

On the other hand the second random propylene copolymer fraction (R-PP2) preferably has a comonomer content of at least 7.0 wt.-%, more preferably in the range 7.0 to 20.0 wt.-%, still more preferably in the range 9.0 to 19.0 wt.-%, yet more preferably in the range 10.0 to 18.0 wt.-%.

The comonomers of the first random propylene copolymer fraction (R-PP1) and second random propylene copolymer fraction (R-PP2), respectively, copolymerizable with propylene are ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the first random propylene copolymer fraction (R-PP1) and second random propylene copolymer fraction (R-PP2), respectively, comprise, especially consist of, monomers copolymerizable with propylene from the group consisting of ethylene, 1-butene and 1-hexene. More specifically the first random propylene copolymer fraction (R-PP 1) and second random propylene copolymer fraction (R-PP2), respectively, comprise - apart from propylene - units derivable from ethylene and/or 1-butene. In a preferred embodiment the first random propylene copolymer fraction (R-PP1) and the second random propylene copolymer fraction (R-PP2) comprise the same comonomers, i.e. ethylene only.

Preferably the weight ratio between the first random propylene copolymer fraction (R-PP1) and the second random propylene copolymer fraction (R-PP2) is 20/80 to 80/20, more preferably 30/70 to 70/30.

As mentioned above a further component of the heterophasic propylene copolymer (RAHECO) is the elastomeric propylene copolymer (E) dispersed in the matrix (M), i.e. in the random propylene copolymer (R-PP). Concerning the comonomers used in the elastomeric propylene copolymer (E) it is referred to the information provided for the heterophasic propylene copolymer (RAHECO) and the random propylene copolymer (R-PP), respectively. Accordingly the elastomeric

propylene copolymer (E) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the elastomeric propylene copolymer (E) comprises, especially consists of, monomers copolymerizable with propylene from the group consisting of ethylene, 1-butene and 1-hexene. More specifically the elastomeric propylene copolymer (E) comprises - apart from propylene - units derivable from ethylene and/or 1-butene. Thus in an especially preferred embodiment the elastomeric propylene copolymer (E) comprises units derivable from ethylene and propylene only. It is especially preferred that the random propylene copolymer (R-PP) and the elastomeric propylene copolymer (E) comprises the same comonomers. Accordingly in one specific embodiment the random propylene copolymer (R-PP) and the elastomeric propylene copolymer (E) comprise propylene and ethylene only.

The comonomer content of the elastomeric propylene copolymer (E) preferably is not more than 25.0 wt.-%, more preferably not more than 20 wt.-%, still more preferably in the range of 10.0 to 20.0 wt.-%, yet more preferably in the range of 12.0 to 18.0 wt.-%.

The propylene copolymer, i.e. the heterophasic propylene copolymer (RAHECO), as defined in the instant invention may contain up to 1.0 wt.-% additives, like nucleating agents and antioxidants, as well as slip agents and antiblocking agents.

The present invention is not only directed to the instant propylene copolymer, i.e. the heterophasic propylene copolymer (RAHECO), but also to films made therefrom. Accordingly in a further embodiment the present invention is directed to a film, preferably to an unoriented film, comprising at least 70 wt.-%, preferably comprising at least 80 wt.-%, more preferably comprising at least 90 wt.-%, still more preferably comprising at least 95 wt.-%, yet more preferably comprising at least 99 wt.-%, of the instant propylene copolymer, i.e. the heterophasic propylene copolymer (RAHECO). In one preferred embodiment the film, preferably the unoriented film, consists of the propylene copolymer, i.e. consists of the heterophasic propylene copolymer (RAHECO).

One distinguishes between unoriented and oriented films (see for instance polypropylene handbook, Nello Pasquini, 2nd edition, Hanser). Oriented films are typically biaxially oriented films, whereas unoriented films are cast or blown films. Accordingly an unoriented film is not drawn intensively in machine and transverse direction as done by oriented films. Thus the unoriented film according to this invention is not a biaxially oriented film. Preferably the unoriented film according to the instant invention is a blown film or cast film, the latter being preferred.

Preferably the film, i.e. the unoriented film, has a thickness of 5 to 2,000 $\mu$m, preferably of 10 to 1,000 $\mu$m, more preferably of 20 to 700 $\mu$m, like of 40 to 500 $\mu$m.

The instant propylene copolymer, i.e. the heterophasic propylene copolymer (RAHECO), is preferably obtained by a specific process. Accordingly the instant propylene copolymer, i.e. the heterophasic propylene copolymer (RAHECO), is preferably obtained by a sequential polymerization process comprising the steps of

(a) polymerizing in a first reactor (R1)
propylene and
ethylene and/or a C4 to C 12 $\alpha$-olefin, preferably ethylene,
obtaining a first polymer fraction, i.e. a first random propylene copolymer fraction (R-PP1),
(b) transferring the first polymer fraction, i.e. the first random propylene copolymer fraction (R-PP1), into a second reactor (R2),
(c) polymerizing in said second reactor (R2) in the presence of the first polymer fraction, i.e. of the first random propylene copolymer fraction (R-PP 1),
propylene and
ethylene and/or a C4 to C12 $\alpha$-olefin, preferably ethylene,
obtaining a second polymer fraction, i.e. a second random propylene copolymer fraction (R-PP2), the first and second polymer fraction form a first mixture, i.e. the random propylene copolymer (R-PP),
(d) transferring said first mixture, the random propylene copolymer (R-PP), into a third reactor (R3),
(e) polymerizing in said third reactor (R3) in the presence of the first mixture, i.e. the random propylene copolymer (R-PP),
propylene and
ethylene and/or a C4 to C 12 $\alpha$-olefin, preferably ethylene,
obtaining a third polymer fraction, said third polymer fraction is preferably the first fraction of the elastomeric propylene copolymer (E); the third polymer fraction and the first mixture, i.e. the random propylene copolymer (R-PP), form a second mixture,
(f) transferring said second mixture into a fourth reactor (R4),
(g) polymerizing in said forth reactor (R4) in the presence of the second mixture
propylene and
ethylene and/or a C4 to C 12 $\alpha$-olefin, preferably ethylene,
obtaining a forth polymer fraction, said forth polymer fraction is preferably the second fraction of the elastomeric

propylene copolymer (E); the forth polymer fraction and the second mixture form the propylene copolymer, i.e. the heterophasic propylene copolymer (RAHECO),

(h) removing the propylene copolymer from the fourth reactor (R4), and

(i) optionally visbreaking said propylene copolymer, i.e. said heterophasic propylene copolymer (RAHECO).

Preferably between the second reactor (R2), the third reactor (R3) and the fourth reactor (R4) the monomers are flashed out.

The term "sequential polymerization process" indicates that the propylene copolymer, i.e. the heterophasic propylene copolymer (RAHECO), is produced in at least four reactors, preferably in four reactors, connected in series. Accordingly the present process comprises at least a first reactor (R1), a second reactor (R2), a third reactor (R3), and a fourth reactor (R4). The term "polymerization reactor" shall indicate that the main polymerization takes place. Thus in case the process consists of four polymerization reactors, this definition does not exclude the option that the overall process comprises for instance a pre-polymerization step in a pre-polymerization reactor. The term "consist of" is only a closing formulation in view of the main polymerization reactors.

As stated above in the first two reactors the matrix (M), i.e. the random propylene copolymer (R-PP) is produced. More precisely, in the first reactor (R1) the first random propylene copolymer fraction (R-PP 1) is produced whereas in the second reactor (R2) the second random propylene copolymer fraction (R-PP2).

The preferred comonomers used in the first reactor (R1) are the same as indicated above, for the first random propylene copolymer fraction (R-PP1). Accordingly especially preferred comonomers are ethylene, 1-butene and 1-hexene. In one specific embodiment the comonomer is ethylene.

Preferably the weight ratio between the first random propylene copolymer fraction (R-PP1) and the second random propylene copolymer fraction (R-PP2) is 20/80 to 80/20, more preferably 30/70 to 70/30.

Accordingly in the first reactor (R1) a first random propylene copolymer fraction (R-PP 1) is produced having a comonomer content of equal or below 5.0 wt.-%, more preferably of equal or below 4.0 wt.-%, yet more preferably in the range 0.5 to 5.0 wt.-%, still more preferably in the range 0.5 to 4.0 wt.-%, like in the range of 1.0 to 3.5 wt.-%.

In the second rector (R2) the second random propylene copolymer fraction (R-PP2) is produced obtaining thereby the random propylene copolymer (R-PP).

The preferred comonomers used in the second reactor (R2) are the same as indicated above, for the first reactor (R1). Accordingly especially preferred comonomers are ethylene, 1-butene and 1-hexene. In one specific embodiment the comonomer is ethylene.

The second random propylene copolymer fraction (R-PP2) preferably has comonomer content of at least 7.0 wt.-%, more preferably in the range 7.0 to 20.0 wt.-%, still more preferably in the range 9.0 to 19.0 wt.-%, yet more preferably in the range 10.0 to 18.0 wt.-%.

Thus the overall comonomer content in the second reactor (R2), i.e. the comonomer content of the random propylene copolymer (R-PP), is at least 4.0 wt.-%, more preferably at least 6.0 wt.-%, still more preferably in the range of 4.0 to 15.0 wt.-%, yet more preferably in the range of 6.0 to 12.0 wt.-%, still more preferably in the range of 7.0 to 11.0 wt.-%, like in the range of 7.8 to 10.0 wt.-%.

The comonomers of the random propylene copolymer (R-PP), of the first random propylene copolymer fraction (R-PP 1), and of the second random propylene copolymer fraction (R-PP2) copolymerizable with propylene are ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer (R-PP), the first random propylene copolymer fraction (R-PP 1), and the second random propylene copolymer fraction (R-PP2) comprise, especially consist of, monomers copolymerizable with propylene from the group consisting of ethylene, 1-butene and 1-hexene. More specifically the random propylene copolymer (R-PP), the first random propylene copolymer fraction (R-PP1) and the second random propylene copolymer fraction (R-PP2) comprise - apart from propylene - units derivable from ethylene and/or 1-butene. In a preferred embodiment the random propylene copolymer (R-PP), the first random propylene copolymer fraction (R-PP 1) and the second random propylene copolymer fraction (R-PP2) comprise the same comonomers, i.e. ethylene only.

Further the first random propylene copolymer fraction (R-PP 1), i.e. the polymer of the first reactor (R1), has preferably a xylene cold soluble (XCS) fraction of equal or below than 12.0 wt.-%, more preferably in the range of 3.0 to 12.0 wt.%, still more preferably in the range of 4.0 to 11.0 wt.-%, yet more preferably in the range of 5.0 to 10.0 wt.-%.

On the other hand the second random propylene copolymer fraction (R-PP2), i.e. the polymer produced in the second reactor (R2), preferably has a xylene cold soluble (XCS) fraction of equal or more than 20 wt.-%, more preferably in the range of 25 to 95 wt.-%, still more preferably in the range of 40 to 90 wt.-%.

Accordingly the overall xylene cold soluble (XCS) content in the second reactor, i.e. the xylene cold soluble (XCS) fraction of the random propylene copolymer (R-PP), preferably is equal or more than 20.0 wt.-%, more preferably is in the range of 20.0 to 45.0 wt.-%, still more preferably is in the range of 25.0 to 43.0 wt.-%, yet more preferably is in the range of 30.0 to 42.0 wt.-%.

Preferably the first random propylene copolymer fraction (R-PP 1) preferably has a melt flow rate $MFR_2$ (230

°C) in the range of in the range of 0.3 to 1.9 g/10min, more preferably in the range 0.7 to 1.5 g/10min.

On the other hand the second random propylene copolymer fraction (R-PP2), i.e. the polymer produced in the second reactor (R2), preferably has a melt flow rate $MFR_2$ (230 °C) in the range of 0.4 to 1.0 g/10min, more preferably in the range of 0.4 to 0.9 g/10min.

Accordingly the overall melt flow rate $MFR_2$ (230 °C) in the second reactor, i.e. the melt flow rate $MFR_2$ (230 °C) of the random propylene copolymer (R-PP), preferably is in the range of 0.3 to 5.0 g/10min, more preferably in the range of 0.3 to 1.9 g/10min, like 0.5 to 1.5 g/10min.

Thus after the second reactor (R2) the matrix (M), i.e. the random propylene copolymer (R-PP), of the propylene copolymer, i.e. the heterophasic propylene copolymer (RAHECO), is obtained. This matrix (M) is subsequently transferred in the third reactor (R3) in which the first fraction of the elastomeric propylene copolymer (E) is produced (step (e)).

The preferred comonomers used in the third reactor (R3) are the same as indicated above, for the first reactor (R1). Accordingly especially preferred comonomers are ethylene, 1-butene and 1-hexene. In one specific embodiment the comonomer is ethylene.

The obtained second mixture comprises the matrix (M) in which the first fraction of the elastomeric propylene copolymer (E) is dispersed. Said second mixture has preferably a comonomer content which is higher than the comonomer content of the second reactor (R2). Thus it is preferred that the comonomer content of the second mixture, i.e. after step (e)), is at least 8.0 wt.-%, preferably in the range of 8.0 to 18.0 wt.-%, more preferably in the range of 8.0 to 15.0 wt.-%, yet more preferably in the range of 9.0 to 14.0 wt.-%, still more preferably in the range of 9.5 to 13.5 wt.-%.

Another characteristic feature of the second mixture is its xylene cold soluble (XCS) content. Accordingly it is appreciated that the second mixture has xylene cold soluble (XCS) fraction of at least 30 wt.-%, more preferably of at least 35 wt.%, still more preferably in the range of 30 to 55 wt.-%, yet more preferably in the range of 35 to 50 wt.-%, still yet more preferably in the range 38 to 50 wt.-%.

The comonomer content in the xylene cold soluble fraction (XCS) of the second mixture preferably is equal or below 8.0 wt.-%, more preferably in the range of 1.0 to 8.0 wt.-%, yet more preferably in the range of 2.0 to 7.0 wt.-%, still more preferably in the range of 3.0 to 6.0 wt.-%.

The xylene cold soluble (XCS) fraction of the second mixture can be further specified by its intrinsic viscosity. Accordingly the xylene cold soluble fraction (XCS) of the second mixture preferably has an intrinsic viscosity (IV) measured according to ISO 1628/1 (at 135 °C in decalin) of equal or below 2.5 dl/g, more preferably in the range of 1.5 to below 2.5 dl/g, still more preferably in the range of 1.8 to below 2.5 dl/g, yet more preferably like in the range of 1.9 to 2.4 dl/g.

In step (f) the second mixture is transferred in the fourth reactor (R4). In the fourth reactor (R4) the second fraction of the elastomeric propylene copolymer (E) is produced (step (g)). The preferred comonomers used in the fourth reactor (R4) are the same as indicated above for the first reactor (R1). Accordingly especially preferred comonomers are ethylene, 1-butene and 1-hexene. In one specific embodiment the comonomer is ethylene.

The so obtained polymer is the propylene copolymer, i.e. the heterophasic propylene copolymer (RAHECO), of the instant invention.

Preferably the heterophasic propylene copolymer (RAHECO) after step (g) has a melt flow rate $MFR_2$ (230 °C) in the range of 0.5 to 1.9 g/10min, like 0.5 to 1.5 g/10min.

It is preferred that the comonomer content of the xylene cold soluble fraction (XCS) after step (g), i.e. the comonomer content of the xylene cold soluble fraction (XCS) of the propylene copolymer, i.e. of the heterophasic propylene copolymer (RAHECO), is equal or below 15.0 wt.-%, more preferably in the range of 4.0 to 15.0 wt.-%, yet more preferably in the range of 5.0 to 13.0 wt.-%, still more preferably in the range of 5.5 to 10.0 still yet more preferably in the range of 6.0 to 9.0 wt.-%.

The total comonomer content after step (g), i.e. of the propylene copolymer (the heterophasic propylene copolymer (RAHECO)), is at least 8.0 wt.-%, preferably in the range of 8.0 to 17.0 wt.-%, more preferably in the range of 8.0 to 15.0 wt.-%, yet more preferably in the range of 9.0 to 14.0 wt.-%, still more preferably in the range of 9.5 to 13.5 wt.-%.

The polymer after step (g), i.e. the propylene copolymer (the heterophasic propylene copolymer (RAHECO)), fulfils also the inequations (I) as indicated above.

The amount of xylene cold solubles (XCS) in the second mixture and in the propylene copolymer after step (g) is more or less the same. The same holds true for the intrinsic viscosities of the respective xylene cold soluble (XCS) fractions.

Accordingly the propylene copolymer, i.e. the heterophasic propylene copolymer (RAHECO), has xylene cold soluble (XCS) fraction of at least 30 wt.-%, more preferably of at least 35 wt.-%, still more preferably in the range of 35 to 55 wt.-%, yet more preferably in the range of 35 to 50 wt.-%, yet still more preferably in the range 38 to 50 wt.-%.

Further the intrinsic viscosity (IV) measured according to ISO 1628/1 (at 135 °C in decalin) of the xylene cold soluble fraction (XCS) of propylene copolymer after step (g) preferably is of equal or below 2.8 dl/g, more preferably in the range of 1.5 to below 2.8 dl/g, still more preferably in the range of 1.8 to below 2.6 dl/g, yet more preferably like in the range of 2.0 to 2.5 dl/g.

Concerning the melting temperature of the propylene copolymer, i.e. of the heterophasic propylene copolymer

(RAHECO), after step (g) it is referred to the information provide above. The same holds true for the crystalline fractions obtained by the stepwise isothermal segregation technique (SIST).

Preferably the weight ratio between the matrix (M), i.e. the random propylene copolymer (R-PP), after step (c) and the elastomeric propylene copolymer (E) produced in the steps (e) to (g) is 50/50 to 80/20, more preferably 60/40 to 77/23, yet more preferably 62/38 to 75/25.

After step (g) the propylene copolymer, i.e. the heterophasic propylene copolymer (RAHECO), can be optionally subjected a visbreaking step (step (i)) obtaining thereby a propylene copolymer, i.e. a heterophasic propylene copolymer (RAHECO), with enhanced melt flow rate. The visbreaking may be carried out in any known manner, but typically the present invention envisages chemical visbreaking using a peroxide visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxyisopropyl)benzene (DIPP) (for instance sold under the tradenames Perkadox 14S and Lupperox DC). Suitable amounts of peroxide to be employed in accordance with the present invention are in principle known to the skilled person and can easily be calculated on the basis of the amount of propylene copolymer of step (g) to be subjected to visbreaking, the $MFR_2$ (230 °C) value of the propylene copolymer of step (g) to be subjected to visbreaking and the desired target $MFR_2$ (230 °C) of the product to be obtained. Accordingly, typical amounts of peroxide visbreaking agent are from 0.005 to 0.5 wt.-%, more preferably from 0.01 to 0.2 wt.-%, based on the amount of propylene copolymer employed.

Typically, visbreaking in accordance with the present invention is carried out in an extruder, so that under the suitable conditions, an increase of melt flow rate is obtained. During visbreaking, higher molar mass chains of the starting product are broken statistically more frequently than lower molar mass molecules, resulting in an overall decrease of the average molecular weight and an increase in melt flow rate.

Due to the visbreaking the melt flow rate, the amount of xylene cold solubles (XCS) and the intrinsic viscosity (IV) ofthe xylene cold soluble (XCS) fraction of the propylene copolymer, i.e. of the heterophasic propylene copolymer (RAHECO), are affected. On the other hand the melting temperature, the crystalline fraction obtained by the stepwise isothermal segregation technique (SIST), the total comonomer content and the comonomer content of the xylene cold soluble (XCS) fraction of the propylene copolymer, i.e. of the heterophasic propylene copolymer (RAHECO), are not affected. Thus the non-visbroken propylene copolymer (after step (g)) and the visbroken propylene copolymer (after step (i)) have the same melting temperature, the same crystalline fraction obtained by the stepwise isothermal segregation technique (SIST), the same total comonomer content and the same comonomer content of the xylene cold soluble (XCS) fraction. Thus with regard to these embodiments reference is made to the information provided above.

The visbroken propylene copolymer preferably has a higher melt flow rate than the non visbroken propylene copolymer. Accordingly the propylene copolymer after step (i) preferably has a melt flow rate $MFR_2$ (230 °C) in the range of 2.0 to 15.0 g/10 min, more preferably in the range of 2.5 to 12.0 g/10min.

Further it is preferred that the xylene cold soluble fraction (XCS) of propylene copolymer after step (i) is at least 30 wt.-%, more preferably is in the range of 35 to 55 wt.-%, yet more preferably is in the range of 35 to 50 wt.-%, still yet more preferably is in the range 36 to 49 wt.-%.

Preferably the xylene cold soluble fraction (XCS) of propylene copolymer after step (i) has an intrinsic viscosity (IV) measured according to ISO 1628/1 (at 135 °C in decalin) of equal or below 2.5 dl/g, more preferably of in the range of, still more preferably in the range of 1.2 to 2.3 dl/g, still yet more preferably like in the range of 1.5 to below 2.0 dl/g.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2), the third reactor (R3), and the fourth reactor (R4) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like loop reactor (LR), whereas the second reactor (R2), third reactor (R3) and the fourth reactor (R4) are gas phase reactors (GPR). Accordingly for the instant process at least four, preferably four polymerization reactors, namely a slurry reactor (SR), like loop reactor (LR), a first gas phase reactor (GPR-1), a second gas phase reactor (GPR-2) and a third gas phase reactor (GPR-3) connected in series are used. If needed prior to the slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the propylene copolymer, i.e. the heterophasic propylene copolymer (RAHECO), as defined above the conditions for the first reactor (R1), i.e. the slurry reactor (SR), like a loop reactor (LR), of step (a) may be as follows:

- the temperature is within the range of 40 °C to 110 °C, preferably between 60 °C and 100 °C, 68 to 90 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor (R3), preferably in the second gas phase reactor (GPR-2), and the fourth reactor (R4), preferably in the third gas phase reactor (GPR-3), are similar to the second reactor (R2).

The residence time can vary in the three reactor zones.

In one embodiment of the process for producing the propylene copolymer, i.e. the heterophasic propylene copolymer (RAHECO), the residence time the first reactor (R1), i.e. the slurry reactor (SR), like a loop reactor (LR), is in the range 0.2 to 4 hours, e.g. 0.3 to 1.5 hours and the residence time in the gas phase reactors will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 0 to 50 °C, preferably from 10 to 45 °C, and more preferably from 15 to 40 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the propylene copolymer, i.e. the heterophasic propylene copolymer (RAHECO), is obtained by a sequential polymerization process, as described above, in the presence of a catalyst system comprising as component (i) a Ziegler-Natta procatalyst which contains a trans-esterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

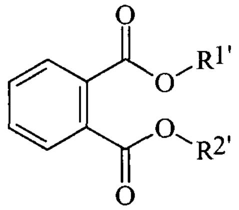

(I)

wherein $R^{1'}$ and $R^{2'}$ are independently at least a $C_5$ alkyl under conditions where a transesterification between said $C_1$ to $C_2$ alcohol and said dialkylphthalate of formula (I) takes place to form the internal donor

c) washing the product of stage b) or

d) optionally reacting the product of step c) with additional $TiCl_4$.

The procatalyst is produced as defined for example in the patent applications WO 87/07620, WO 92/19653, WO 92/19658 and EP 0 491 566.

First an adduct of $MgC_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl, and n is 1 to 6, is contacting with $TiCl_4$ to form a titanised carrier, followed by the steps of

- adding to said titanised carrier

  (i) a dialkylphthalate of formula (I) with $R^{1'}$ and $R^{2'}$ being independently at least a $C_5$-alkyl, like at least a $C_8$-alkyl, or preferably

  (ii) a dialkylphthalate of formula (I) with $R^{1'}$ and $R^{2'}$ being the same and being at least a $C_5$-alkyl, like at least a $C_8$-alkyl,

  or more preferably

  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

  to form a first product,
- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

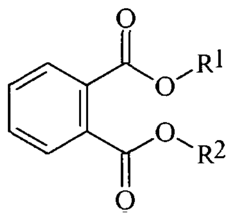

(II)

  with $R^1$ and $R^2$ being methyl or ethyl, preferably ethyl,

  the dialkylphthalat of formula (II) being the internal donor and
- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is

obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BCF20P catalyst of Borealis (prepared according to WO 92/19653 as disclosed in WO 99/24479; especially with the use of dioctylphthalate as dialkylphthalate of formula (I) according to WO 92/19658) or the catalyst Polytrak 8502, commercially available from Grace.

For the production of the propylene copolymer, i.e. the heterophasic propylene copolymer (RAHECO), according to the invention the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (IIIa) or (IIIb). Formula (IIIa) is defined by

$$Si(OCH_3)_2R_2^5 \qquad (IIIa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclollexyl, methylcyclopentyl and cycloheptyl.

Formula (IIIb) is defined by

$$Si(OCH_2CH_3)_3(NR^xR^y) \qquad (IIIb)$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor of formula (IIIb) is diethylaminotriethoxysilane.

More preferably the external donor is selected from the group consisting of diethylaminotriethoxysilane [$Si(OCH_2CH_3)_3(N(CH_2CH_3)_2$], dicyclopentyl dimethoxy silane [$Si(OCH_3)_2$(cyclo-pentyl)$_2$], diisopropyl dimethoxy silane [$Si(OCH_3)_2(CH(CH_3)_2)_2$] and mixtures thereof. Most preferably the external donor is dicyclopentyl dimethoxy silane [$Si(OCH_3)_2$(cyclo-pentyl)$_2$].

If desired the Ziegler-Natta procatalyst is modified by polymerizing a vinyl compound in the presence of the catalyst system, comprising the special Ziegler-Natta procatalyst (component (i)), the external donor (component (iii)) and optionally the cocatalyst (component (ii)), wherein the vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms. The so modified catalyst is used for the preparation of the propylene copolymer, i.e. of the heterophasic propylene copolymer (RAHECO), according to this invention.

The additives as stated above are added prior or after visbreaking to the propylene copolymer, i.e. to the heterophasic propylene copolymer (RAHECO). Preferably, these additives are mixed into the propylene copolymer, i.e. to the heterophasic propylene copolymer (RAHECO), prior to visbreaking. In another preferred embodiment the additives and the degrading agent (peroxide) are added in the same extrusion / mixing process, preferably into a co-rotating twin screw extruder as mentioned below.

For mixing, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then further processed, e.g. by film forming process as described below.

In case a film is produced it can be accomplished by cast film or blown film technology. In the cast film technology the molten propylene copolymer, i.e. the molten heterophasic propylene copolymer (RAHECO), is extruded through a slot extrusion die onto a chill roll to cool the polymer to a solid film. Typically propylene copolymer, i.e. the heterophasic propylene copolymer (RAHECO), is firstly compressed and liquefied in an extruder, it being possible for any additives to be already added to the polymer or introduced at this stage via a masterbatch. The melt is then forced through a flat-film die (slot die), and the extruded film is taken off on one or more take-off rolls, during which it cools and solidifies. It has proven particularly favorable to keep the take-off roll or rolls, by means of which the extruded film is cooled and solidified, at a temperature from 10 to 50°C, preferably from 15 to 40°C. The obtained product is an unstretched film which can if desired biaxially stretched.

In the blown film process the propylene copolymer, i.e. the heterophasic propylene copolymer (RAHECO), melt is extruded through an annular die and blown into a tubular film by forming a bubble which is collapsed between nip rollers after solidification. The blown extrusion can be preferably effected at a temperature in the range 160 to 240 °C, and cooled by water or preferably by blowing gas (generally air) at a temperature of 10 to 50 °C to provide a frost line height of 0.5 to 8 times the diameter ofthe die. The blow up ratio should generally be in the range of from 1.5 to 4, such as from 2 to 4, preferably 2.5 to 3.5.

In the following the present invention is further illustrated by means of examples.

## EXAMPLES

### 1. Measuring methods

The following definitions of terms and determination methods apply for the above general description of the invention as well as to the below examples unless otherwise defined. **Calculation** of comonomer content of the second propylene copolymer fraction (R-PP2):

$$\frac{C(PP) - w(PP1)x\,C(PP1)}{w(PP2)} = C(PP2) \quad (I)$$

wherein

- w(PP1) is the weight fraction [in wt.-%] of the first propylene copolymer fraction (R-PP1),
- w(PP2) is the weight fraction [in wt.-%] of second propylene copolymer fraction (R-PP2),
- C(PP1) is the comonomer content [in wt.-%] of the first propylene copolymer fraction (R-PP1),
- C(PP) is the comonomer content [in wt.-%] of the random propylene copolymer (R-PP),
- C(PP2) is the calculated comonomer content [in wt.-%] of the second propylene copolymer fraction (R-PP2).

**Calculation** of the xylene cold soluble (XCS) content of the second propylene copolymer fraction (R-PP2):

$$\frac{XS(PP) - w(PP1)x\,XS(PP1)}{w(PP2)} = XS(PP2) \quad (II)$$

wherein

- w(PP1) is the weight fraction [in wt.-%] of the first propylene copolymer fraction (R-PP1),
- w(PP2) is the weight fraction [in wt.-%] of second propylene copolymer fraction (R-PP2),
- XS(PP1) is the xylene cold soluble (XCS) content [in wt.-%] of the first propylene copolymer fraction (R-PP1),
- XS(PP) is the xylene cold soluble (XCS) content [in wt.-%] of the random propylene copolymer (R-PP),
- XS(PP2) is the calculated xylene cold soluble (XCS) content [in wt.-%] of the second propylene copolymer fraction (R-PP2), respectively.

**Calculation** of melt flow rate $MFR_2$ (230 °C) of the second propylene copolymer fraction (R-PP2):

$$MFR(PP2) = 10^{\left[\frac{\log(MFR(PP)) - w(PP1)\ x\ \log(MFR(PP1))}{w(PP2)}\right]} \quad (III)$$

wherein

| | |
|---|---|
| w(PP1) | is the weight fraction [in wt.-%] of the first propylene copolymer fraction (R-PP1), |
| w(PP2) | is the weight fraction [in wt.-%] of second propylene copolymer fraction (R-PP2), |
| MFR(PP1) | is the melt flow rate $MFR_2$ (230 °C) [in g/10min] of the first propylene copolymer fraction (R-PP1), |
| MFR(PP) | is the melt flow rate $MFR_2$ (230 °C) [in g/10min] ofthe random propylene copolymer (R-PP), |
| MFR(PP2) | is the calculated melt flow rate $MFR_2$ (230 °C) [in g/10min] ofthe second propylene copolymer fraction (R-PP2). |

**Calculation** of comonomer content of the elastomeric propylene copolymer (E), respectively:

$$\frac{C(RAHECO) - w(PP)x\ C(PP)}{w(E)} = C(E) \quad (IV)$$

wherein

| | |
|---|---|
| w(PP) | is the weight fraction [in wt.-%] of the random propylene copolymer (R-PP), i.e. polymer produced in the first and second reactor (R1 + R2), |
| w(E) | is the weight fraction [in wt.-%] of the elastomeric propylene copolymer (E), i.e. polymer produced in the third and fourth reactor (R3 + R4) |
| C(PP) | is the comonomer content [in wt.-%] of the random propylene copolymer (R-PP), i.e. comonomer content [in wt.-%] of the polymer produced in the first and second reactor (R1 + R2), |
| C(RAHECO) | is the comonomer content [in wt.-%] of the propylene copolymer, i.e. is the comonomer content [in wt.-%] of the polymer obtained after polymerization in the fourth reactor (R4), |
| C(E) | is the calculated comonomer content [in wt.-%] of elastomeric propylene copolymer (E), i.e. of the polymer produced in the third and fourth reactor (R3 + R4). |

**$MFR_2$ (230 °C)** is measured according to ISO 1133 (230 °C, 2.16 kg load).

**Comonomer content**, especially ethylene content is measured with Fourier transform infrared spectroscopy (FTIR) calibrated with $^{13}C$-NMR. When measuring the ethylene content in polypropylene, a thin film of the sample (thickness about 250 $\mu$m) was prepared by hot-pressing. The area of absorption peaks 720 and 733 $cm^{-1}$ for propylene-ethylene-copolymers was measured with Perkin Elmer FTIR 1600 spectrometer. Propylene-1-butene-copolymers were evaluated at 767 $cm^{-1}$. The method was calibrated by ethylene content data measured by $^{13}C$-NMR. See also "IR-Spektroskopie für Anwender"; WILEY-VCH, 1997 and "Validierung in der Analytik", WILEY-VCH, 1997

**Flexural Modulus:** The flexural modulus was determined in 3-point-bending at 23°C according to ISO 178 on 80x10x4 $mm^3$ test bars injection moulded in line with EN ISO 1873-2.

**Tensile moduli** in machine and transverse direction were determined according to ISO 527-3 at 23°C on 130 $\mu$m cast films produced on a monolayer cast film line with a melt temperature of 220°C and a chill roll temperature of 20°C. Testing was performed at a cross head speed of 1 mm/min. Steam sterilization was performed in a Systec D series machine (Systec Inc., USA). The samples were heated up at a heating rate of 5 °C/min starting from 23°C. After having been kept for 30 min at 121°C, they were removed immediately from the steam sterilizer and stored at room temperature till processed further.

**Intrinsic viscosity** is measured according to DIN ISO 1628/1, October 1999 (in Decalin at 135 °C).

**The xylene solubles (XCS, wt.-%):** Content of xylene cold solubles (XCS) is determined at 25 °C according ISO 16152; first edition; 2005-07-01

**Melting temperature ($T_m$) and heat of fusion** ($H_f$), **crystallization temperature ($T_c$) and heat of crystallization ($H_c$):** measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and **heat of crystallization ($H_c$)** are determined from the cooling step, while melting temperature and **heat of fusion ($H_f$)** are determined from the second heating step

**Stepwise Isothermal Segregation Technique (SIST)**

The isothermal crystallisation for SIST analysis was performed in a Mettler TA820 DSC on 3±0.5 mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C
(ix) held for 2 hours at 115 °C,
(x) then cooled with 80 °C/min to 105 °C
(xi) held for 2 hours at 105 °C.

After the last step the sample was cooled down with 80 C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy of fractions melting within temperature intervals of 50 to 60 °C; 60 to 70 °C; 70 to 80 °C; 80 to 90 °C; 90 to 100 °C; 100 to 110 °C; 110 to 120 °C; 120 to 130 °C; 130 to 140 °C; 140 to 150 °C; 150 to 160 °C; 160 to 170 °C; 170 to 180 °C; 180 to 190 °C; 190 to 200 °C.

**Haze** was determined according to ASTM D 1003-07on 60x60x1 $mm^3$ plaques injection moulded in line with EN ISO 1873-2 using a melt temperature of 200°C. Steam sterilization was performed as described before.

**Transparency and clarity** were determined according to ASTM D1003-00 on cast films of 50 μm thickness produced on a monolayer cast film line with a melt temperature of 220°C and a chill roll temperature of 20°C.

**Flowability** was determined on the reactor powders according to ISO 6186:1998 at a temperature of 23°C; the nozzle diameter was 15 mm and the tested amount of powder was 150 g.

**2. Examples**

The catalyst used in the polymerization process for inventive examples 1 and 2 was the commercial BCF20P catalyst (1.9 wt% Ti-Ziegler-Natta-catalyst as described in EP 591 224) of Borealis AG with triethyl-aluminium (TEAL) as co-catalyst and dicyclo pentyl dimethoxy silane (D-donor) as donor. The aluminium to donor ratio is indicated in table 1.

The resulting polymers were visbroken in a co-rotating twin-screw extruder (type: Coperion ZSK 57) with suitable amounts of 2,5-dimethyl-2,5-di-(tert. butylperoxy)hexane (Trigonox® 101 supplied by AKZO Nobel, Netherlands) added to the extruder as concentrate of 1 wt.-% on polypropylene powder. As additives 0.04 wt.% synthetic hydrotalcite (DHT-4A supplied by Kisuma Chemicals, Netherlands) and 0.15 wt% Irganox B 215 (1:2-blend of Irganox 1010 (Pentaerythrityl-tetrakis(3-(3',5'-di-tert.butyl-4-hydroxytoluyl)-propionate and tris (2,4-di-t-butylphenyl) phosphate) phosphite) of BASF AG, Germany were added to the polymers in the same step.

Comparative example 2 is the commercial grade Bormed SC820CF produced by Borealis being an ethylene-propylene random-heterophasic copolymer for cast film applications.

**Table 1(a):** Polymerization conditions

| | | CE1 | CE2 | E1 | E2 |
|---|---|---|---|---|---|
| TEAL/D | [mol/mol] | 15 | | 15 | 15 |
| **Loop** | | | | | |
| Matrix split loop | [wt.-%] | 38 | 40 | 36 | 35 |
| $MFR_2$ | [g/10min] | 1.4 | 3.9 | 1.1 | 1.1 |
| C2 content | [wt.-%] | 1.9 | 2.5 | 2.2 | 2.5 |
| XCS | [wt.-%] | 7 | | 6 | 9.3 |
| $H_2$/C3 ratio | [mol/kmol] | 1.09 | | 1.08 | 1.06 |

(continued)

| **Loop** | | | | | |
|---|---|---|---|---|---|
| C2/C3 ratio | [mol/kmol] | 3.09 | | 3.03 | 2.88 |
| **1 GPR** | | | | | |
| Matrix split GPR1 | [wt.-%] | 62 | 60 | 64 | 65 |
| $MFR_2$ | [g/10min] | 0.7 | 3.9 | 0.7 | 0.7 |
| C2 content | [wt.-%] | 9.2 | 4.0 | 8.7 | 8.46 |
| XCs | [wt.-%] | 21.6 | | 36 | 39.5 |
| $H_2$/C3 ratio | [mol/kmol] | 18.1 | | 20.8 | 21.0 |
| C2/C3 ratio | [mol/kmol] | 87.6 | | 89.5 | 90.0 |
| **2 GPR** | | | | | |
| $MFR_2$ | [g/10min] | 1.0 | 3.9 | 0.9 | 0.8 |
| C2 content | [wt.-%] | 13.3 | 8.0 | 11.2 | 10.3 |
| XCs | [wt.-%] | 37.6 | 23.0 | 48.6 | 43.8 |
| C2 of XCS | [wt.-%] | 17.4 | 25.0 | 4.5 | 4.8 |
| IV of XCS | [dl/g] | 2.1 | 2.0 | 2.2 | 2.3 |
| $H_2$/C3 ratio | [mol/kmol] | 381 | | 381 | 442 |
| C2/C3 ratio | [mol/kmol] | 298 | | 150 | 126 |
| **3 GPR** | | | | | |
| $MFR_2$ | [g/10min] | 0.9 | | 0.9 | 0.8 |
| C2 content | [wt.-%] | 14.1 | | 11.8 | 10.2 |
| XCS | [wt.-%] | 43.8 | | 48.4 | 42.1 |
| C2 of XCS | [wt.-%] | 14.2 | | 7.4 | 6.8 |
| IV of XCS | [dl/g] | 2.2 | | 2.4 | 2.3 |
| Tm | [°C] | 154 | 141 | 152 | 153 |
| $H_2$/C3 ratio | [mol/kmol] | 405 | | 407 | 459 |
| C2/C3 ratio | [mol/kmol] | 302 | | 144 | 120 |

**Table 1 (b):** Polymerization conditions

| **Visbreaking** | | | | | |
|---|---|---|---|---|---|
| POX 1 wt.% on polypropylene | [wt.-%] | 1.3 | 0 | 1.5 | 1.5 |
| $MFR_2$ | [g/10min] | 3.75 | | 3.7 | 3.5 |
| XCS | [wt.-%] | 40 | | 44 | 38 |
| IV of XCS | [dl/g] | 1.8 | | 1.9 | 1.9 |
| split loop | [wt.-%] | 25 | 34 | 23 | 25 |
| split GPR1 | [wt.-%] | 40 | 51 | 42 | 47 |
| split (GPR2+GPR3) | [wt.-%] | 35 | 15 | 35 | 28 |
| C2 content produced in loop | [wt.-%] | 1.9 | 2.5 | 2.2 | 2.5 |
| C2 content produced in GPR1 | [wt.-%] | 13.7 | 5.0 | 12.4 | 11.7 |

(continued)

| Visbreaking | | | | | |
|---|---|---|---|---|---|
| C2 content produced in GPR2 and GPR3 | [wt.-%] | 23.3 | 30.7 | 17.4 | 14.6 |

C2 ethylene
IV intrinsic viscosity
$H_2$/C3 ratio hydrogen / propylene ratio
C2/C3 ratio ethylene / propylene ratio
POX 2,5-dimethyl-2,5-di-(tert. butylperoxy)hexane
1/2/3 GPR 1/2/3 gas phase reactor
Loop Loop reactor

**Table 2: SIST**

| Range [°C] | CE1 | CE2 | E1 | E2 |
|---|---|---|---|---|
| | Fraction [wt.-%] | | | |
| 50 - 60 | 0.64 | 0.31 | 0.95 | 0.84 |
| 60 - 70 | 1.99 | 1.03 | 2.96 | 2.75 |
| 70 - 80 | 3.48 | 1.95 | 5.09 | 4.95 |
| 80 - 90 | 5.10 | 2.95 | 6.99 | 7.12 |
| 90 - 100 | 5.73 | 3.65 | 6.82 | 7.33 |
| 100 - 110 | 3.81 | 3.20 | 3.09 | 3.36 |
| 110 - 120 | 7.09 | 7.47 | 5.37 | 5.71 |
| 120 - 130 | 7.51 | 15.57 | 5.53 | 5.81 |
| 130 - 140 | 12.63 | 24.63 | 9.77 | 9.71 |
| 140 - 150 | 21.12 | 30.71 | 19.39 | 18.45 |
| 150 - 160 | 29.48 | 8.54 | 31.30 | 31.32 |
| 160 - 170 | 1.43 | 0.00 | 2.75 | 2.66 |
| 170 - 180 | 0.00 | 0.00 | 0.00 | 0.00 |

**Table 3:** Properties

| | | CE1 | CE2 | E1 | E2 |
|---|---|---|---|---|---|
| flowability | [sec] | 15 | n.d. | 12 | 11 |
| Flexural modulus | [MPa] | 273 | 560 | 232 | 296 |
| Haze 60x60x1. B.S. | [%] | 32 | 61 | 24 | 32 |
| Haze 60x60x1. A.S. | [%] | 57 | 77 | 43 | 49 |
| delta Haze | [%] | 26 | 16 | 19 | 18 |
| Transparency 50 $\mu$m film 30 (b.s.) | [%] | 94.3 | | 94.6 | 94.7 |
| Clarity 50 $\mu$m film 30 (b.s.) | [%] | 81.6 | | 87.7 | 87.7 |
| Tensile modulus (MD). 23°C (b.s.) | [MPa] | 162 | 350 | 142 | 169 |
| Tensile modulus (TD). 23°C (b.s.) | [MPa] | 126 | 315 | 130 | 169 |
| Tensile modulus (MD). 23°C (a.s.) | [MPa] | 282 | 580 | 202 | 245 |
| Tensile modulus (TD). 23°C (a.s.) | [MPa]a | 194 | 500 | 174 | 227 |

**Claims**

1. Propylene copolymer having

(a) a xylene cold soluble content (XCS) determined according ISO 16152 (25 °C) in the range of 35 to 55 wt.-%,
(b) a comonomer content in the range of 8.0 to 17.0 wt.-% as measured by FTIR calibrated with $^{13}C$ NMR,
wherein further the propylene copolymer fulfills inequation (I)

$$\frac{Co\ (total)}{Co\ (XCS)} \geq 1.0$$

wherein

Co (total) is the comonomer content [wt.-%] of the propylene copolymer
Co (XCS) is the comonomer content [wt.-%] of the xylene cold soluble fraction (XCS) of the propylene copolymer.

2. Propylene copolymer according to claim 1, wherein the comonomer content of xylene cold soluble (XCS) fraction, determined according to claim 1, of the propylene copolymer is in the range of 4.0 to 15.0 wt.-%.

3. Propylene copolymer according to one of the preceding claims, wherein the propylene copolymer has more than 20.0 wt-% of a crystalline fraction melting in a stepwise isothermal segregation technique analysis (SIST) equal or above 150°C.

4. Propylene copolymer according to one of the preceding claims, wherein the propylene copolymer has

(a) a melting temperature Tm determined by differential scanning calorimetry (DSC) in the range of 145 to 160 °C,
and/or
(b) an intrinsic viscosity (IV) of the xylene cold soluble (XCS) fraction determined according to DIN ISO 1628/1, (in Decalin at 135 °C) in the range of 1.2 to below 2.8 dl/g.

5. Propylene copolymer according to one of the preceding claims, wherein the propylene copolymer has a melt flow rate $MFR_2$ (230 °C) measured according to ISO 1133 in the range of 0.5 to 15.0 g/10min.

6. Propylene copolymer according to one of the preceding claims, wherein the propylene copolymer has

(a) a flexural modulus measured according to ISO 178 of not more than 350 MPa,
and/or
(b) a haze before sterilization determined according to ASTM D 1003-07 of below 35 %,
and/or
(c) a haze after sterilization determined according to ASTM D 1003-07of below 55 %.

7. Propylene copolymer according to one of the preceding claims, wherein the propylene copolymer is a heterophasic propylene copolymer (RAHECO) comprising a matrix (M) and an elastomeric propylene copolymer (E) dispersed in said matrix (M), wherein said matrix (M) is a random propylene copolymer (R-PP).

8. Propylene copolymer according to claim 7, wherein the weight ratio between the matrix (M) and the elastomeric propylene copolymer (E) is 50/50 to 80/20.

9. Propylene copolymer according to claim 7 or 8, wherein

(a) the comonomer content of the random propylene copolymer (R-PP) is in the range of 4.0 to 15.0 wt.-% as measured by FTIR calibrated by $^{13}C$ NMR,
and/or
(b) the propylene copolymer fulfills inequation (II)

$$\frac{Co\ (total)}{Co\ (RPP)} \geq 0.9$$

wherein

Co (total) is the comonomer content [wt.-%] of the propylene copolymer,
Co (RPP) is the comonomer content [wt.-%] of the random propylene copolymer (R-PP).

and/or
(c) the random propylene copolymer (R-PP) has a xylene cold soluble (XCS) determined according to ISO 16 152 fraction in the range of 20.0 to 45.0 wt.-%.

**10.** Propylene copolymer according to one of the preceding claims 7 to 9, wherein the random propylene copolymer (R-PP) comprises at least two different fractions, a first random propylene copolymer fraction (R-PP1) and a second random propylene copolymer fraction (R-PP2), wherein further

(a) the weight ratio between the first random propylene copolymer fraction (R-PP1) and the second random propylene copolymer fraction (R-PP2) 20/80 to 80/20,
and/or
(b) the first random propylene copolymer fraction (R-PP1) has a comonomer content in the range 0.5 to 5.0 wt.-% measured by FTIR calibrated with $^{13}C$ NMR,
and/or
(c) the second random propylene copolymer fraction (R-PP2) has a comonomer content in the range 7.0 to 20.0 wt.-% measured by FTIR calibrated with $^{13}C$ NMR.

**11.** Propylene copolymer according to one of the preceding claims 7 to 10, wherein the elastomeric propylene copolymer (E) has a comonomer content determined by FTIR calibrated with $^{13}C$ NMR in the range of 10.0 to 20.0 wt.-%.

**12.** Film comprising a propylene copolymer according to one of the preceding claims.

**13.** Process for the preparation of a propylene copolymer according to one of the preceding claims, wherein the process is a sequential polymerization process in the presence of a catalyst system comprising as component (i) a Ziegler-Natta procatalyst which contains a trans-esterification product of a lower alcohol and a phtalic ester, comprising the steps of

(a) polymerizing in a first reactor (R1)
propylene and
ethylene and/or a C4 to C 12 α-olefin
obtaining a first polymer fraction,
(b) transferring the first polymer fraction into a second reactor (R2),
(c) polymerizing in said second reactor (R2) in the presence of the first polymer fraction
propylene and
ethylene and/or a C4 to C12 α-olefin,
obtaining a second polymer fraction, the first and second polymer fraction form a first mixture,
(d) transferring said first mixture into a third reactor (R3),
(e) polymerizing in said third reactor (R3) in the presence of the first mixture
propylene and
ethylene and/or a C4 to C12 α-olefin,
obtaining a third polymer fraction, the third polymer fraction and the first mixture form a second mixture,
(f) transferring said second mixture into a fourth reactor (R4),
(g) polymerizing in said fourth reactor (R4) in the presence of the second mixture
propylene and
ethylene and/or a C4 to C12 α-olefin,
obtaining a fourth polymer fraction, the fourth polymer fraction and the second mixture form the propylene copolymer,
(h) removing the propylene copolymer from the fourth reactor (R4), and
(i) optionally vis-breaking said propylene copolymer.

**14.** Process according to claim 13, wherein the first polymer fraction is the first random propylene copolymer (R-PP1), the second polymer fraction is the second random propylene copolymer (R-PP2), the first mixture is the random propylene copolymer (R-PP), and the third polymer fraction and the fourth polymer fraction form together the elastomeric propylene copolymer (E).

**Patentansprüche**

**1.** Propylen-Copolymer mit

(a) einem in kaltem Xylol löslichen Gehalt (XCS), bestimmt gemäß ISO 16152 (25°C), in dem Bereich von 35 bis 55 Gew.-%,
(b) einem Comonomer-Gehalt in dem Bereich von 8,0 bis 17,0 Gew.-%, wie durch FTIR gemessen, geeicht mit $^{13}C$ NMR,
wobei das Propylen-Copolymer weiterhin Ungleichung (I) erfüllt

$$\frac{Co\,(gesamt)}{Co\,(XCS)} \geq 1{,}0$$

worin

Co (gesamt) der Comonomer-Gehalt [Gew.-%] des Propylen-Copolymers ist
Co (XCS) der Comonomer-Gehalt [Gew.-%] der in kaltem Xylol löslichen Fraktion (XCS) des Propylen-Copolymers ist.

**2.** Propylen-Copolymer nach Anspruch 1, wobei der Comonomer-Gehalt der in kaltem Xylol löslichen Fraktion (XCS), bestimmt gemäß Anspruch 1, des Propylen-Copolymers in dem Bereich von 4,0 bis 15,0 Gew.-% liegt.

**3.** Propylen-Copolymer nach einem der vorangehenden Ansprüche, wobei das Propylen-Copolymer mehr als 20,0 Gew.-% von einer kristallinen Fraktion aufweist, die bei einer schrittweisen isothermalen Segregations-Technik-Analyse (SIST) gleich oder oberhalb 150°C schmilzt.

**4.** Propylen-Copolymer nach einem der vorangehenden Ansprüche, wobei das Propylen-Copolymer aufweist

(a) eine Schmelz-Temperatur Tm, bestimmt durch dynamische Differenz-Kalorimetrie (DSC), in dem Bereich von 145 bis 160°C,
und/oder
(b) eine Grenz-Viskosität (IV) der in kaltem Xylol löslichen Fraktion (XCS), bestimmt gemäß DIN ISO 1628/1, (in Decalin bei 135°C) in dem Bereich von 1,2 bis unter 2,8 dl/g.

**5.** Propylen-Copolymer nach einem der vorangehenden Ansprüche, wobei das Propylen-Copolymer eine Schmelze-Massefließ-Rate $MFR_2$ (230°C), gemessen gemäß ISO 1133 in dem Bereich von 0,5 bis 15,0 g/10 min aufweist.

**6.** Propylen-Copolymer nach einem der vorangehenden Ansprüche, wobei das Propylen-Copolymer aufweist

(a) einen Biege-Modul, gemessen gemäß ISO 178, von nicht mehr als 350 MPa,
und/oder
(b) einen Haze-Wert vor Sterilisierung, bestimmt gemäß ASTM D 1003-07, von unter 35 %,
und/oder
(c) einen Haze-Wert nach Sterilisierung, bestimmt gemäß ASTM D 1003-07, von unter 55 %.

**7.** Propylen-Copolymer nach einem der vorangehenden Ansprüche, wobei das Propylen-Copolymer ein heterophasisches Propylen-Copolymer (RAHECO) ist, umfassend eine Matrix (M) und ein elastomeres Propylen-Copolymer (E), dispergiert in der Matrix (M), wobei die Matrix (M) ein statistisches Propylen-Copolymer (R-PP) ist.

**8.** Propylen-Copolymer nach Anspruch 7, wobei das Gewichtsverhältnis zwischen der Matrix (M) und dem elastomeren Propylen-Copolymer (E) 50/50 bis 80/20 ist.

**9.** Propylen-Copolymer nach Anspruch 7 oder 8, wobei

(a) der Comonomer-Gehalt des statistischen Propylen-Copolymers (R-PP) in dem Bereich von 4,0 bis 15,0 Gew.-%, wie gemessen durch FTIR, geeicht durch $^{13}$C NMR, liegt,
und/oder
(b) das Propylen-Copolymer die Ungleichung (II) erfüllt

$$\frac{Co\ (gesamt)}{Co\ (RPP)} \geq 0{,}9$$

worin

Co (gesamt) der Comonomer-Gehalt [Gew.-%] des Propylen-Copolymers ist,
Co (RPP) der Comonomer-Gehalt [Gew.-%] des statistischen Propylen-Copolymers (R-PP) ist,

und/oder
(c) das statistische Propylen-Copolymer (R-PP) eine in kaltem Xylol lösliche Fraktion (XCS), bestimmt gemäß ISO 16152, in dem Bereich von 20,0 bis 45,0 Gew.-% aufweist.

**10.** Propylen-Copolymer nach einem der vorangehenden Ansprüche 7 bis 9, wobei das statistische Propylen-Copolymer (R-PP) mindestens zwei verschiedene Fraktionen umfasst, eine erste statistische Propylen-Copolymer-Fraktion (R-PP1) und eine zweite statistische Propylen-Copolymer-Fraktion (R-PP2), worin weiterhin

(a) das Gewichtsverhältnis zwischen der ersten statistischen Propylen-Copolymer-Fraktion (R-PP1) und der zweiten statistischen Propylen-Copolymer-Fraktion (R-PP2) 20/80 bis 80/20 ist,
und/oder
(b) die erste statistische Propylen-Copolymer-Fraktion (R-PP1) einen Comonomer-Gehalt in dem Bereich 0,5 bis 5,0 Gew.-%, gemessen durch FTIR, geeicht mit $^{13}$C NMR, aufweist,
und/oder
(c) die zweite statistische Propylen-Copolymer-Fraktion (R-PP2) einen Comonomer-Gehalt in dem Bereich 7,0 bis 20,0 Gew.-%, gemessen durch FTIR, geeicht mit $^{13}$C NMR, aufweist.

**11.** Propylen-Copolymer nach einem der vorangehenden Ansprüche 7 bis 10, wobei das elastomere Propylen-Copolymer (E) einen Comonomer-Gehalt, bestimmt durch FTIR, geeicht mit $^{13}$C NMR, in dem Bereich von 10,0 bis 20,0 Gew.-% aufweist.

**12.** Folie bzw. Film, umfassend ein Propylen-Copolymer nach einem der vorangehenden Ansprüche.

**13.** Verfahren zur Herstellung von einem Propylen-Copolymer nach einem der vorangehenden Ansprüche, wobei das Verfahren ein aufeinander folgendes Polymerisations-Verfahren in Gegenwart von einem Katalysator-System ist, umfassend als Komponente (i) einen Ziegler-Natta-Prokatalysator, der ein Umesterungsprodukt von einem niederen Alkohol und einem Phthalsäureester enthält, umfassend die Schritte von

(a) Polymerisieren in einem ersten Reaktor (R1) Propylen und Ethylen und/oder ein C4 bis C12 $\alpha$-Olefin Gewinnen einer ersten Polymer-Fraktion,
(b) Überführen der ersten Polymer-Fraktion in einen zweiten Reaktor (R2),
(c) Polymerisieren in dem zweiten Reaktor (R2) in Gegenwart der ersten Polymer-Fraktion
Propylen und
Ethylen und/oder ein C4 bis C12 $\alpha$-Olefin,
Gewinnen einer zweiten Polymer-Fraktion, wobei die erste und zweite Polymer-Fraktion ein erstes Gemisch bilden,
(d) Überführen des ersten Gemisches in einen dritten Reaktor (R3),
(e) Polymerisieren in dem dritten Reaktor (R3) in Gegenwart des ersten Gemisches
Propylen und
Ethylen und/oder ein C4 bis C12 $\alpha$-Olefin,
Gewinnen einer dritten Polymer-Fraktion, wobei die dritte Polymer-Fraktion und das erste Gemisch ein zweites Gemisch bilden,

(f) Überführen des zweiten Gemisches in einen vierten Reaktor (R4),
(g) Polymerisieren in dem vierten Reaktor (R4) in Gegenwart des zweiten Gemisches
Propylen und
Ethylen und/oder ein C4 bis C12 $\alpha$-Olefin,
Gewinnen einer vierten Polymer-Fraktion, wobei die vierte Polymer-Fraktion und das zweite Gemisch das Propylen-Copolymer bilden,
(h) Entfernen des Propylen-Copolymers aus dem vierten Reaktor (R4), und
(i) gegebenenfalls Visbreaking des Propylen-Copolymers.

**14.** Verfahren nach Anspruch 13, wobei die erste Polymer-Fraktion das erste statistische Propylen-Copolymer (R-PP1) ist, die zweite Polymer-Fraktion das zweite statistische Propylen-Copolymer (R-PP2) ist, das erste Gemisch das statistische Propylen-Copolymer (R-PP) ist, und die dritte Polymer-Fraktion und die vierte Polymer-Fraktion zusammen das elastomere Propylen-Copolymer (E) bilden.

## Revendications

**1.** Copolymère de propylène présentant

(a) une teneur en composés solubles dans le xylène froid (XCS), déterminée conformément à la norme ISO 16152 (25°C), située dans la plage allant de 35 à 55 % en poids,
(b) une teneur en comonomère située dans la plage allant de 8,0 à 17,0 % en poids, telle que mesurée par FT-IR étalonnée avec une RMN-$^{13}$C,

lequel copolymère de propylène satisfait en outre à l'inégalité (I) :

$$\frac{\text{Co (total)}}{\text{Co (XCS)}} \geq 1,0$$

dans laquelle

Co (total) est la teneur en comonomère [% en poids] du copolymère de propylène,
Co (XCS) est la teneur en comonomère [% en poids] de la fraction soluble dans le xylène froid (XCS) du copolymère de propylène.

**2.** Copolymère de propylène selon la revendication 1, dans lequel la teneur en comonomère de la fraction soluble dans le xylène froid (XCS), déterminée conformément à la revendication 1, du copolymère de propylène, est située dans la plage allant de 4,0 à 15,0 % en poids.

**3.** Copolymère de propylène selon l'une quelconque des revendications précédentes, lequel copolymère de propylène comporte plus de 20,0 % en poids d'une fraction cristalline présentant.un point de fusion, par analyse au moyen d'une technique de ségrégation isotherme par paliers (SIST), égal ou supérieur à 150°C.

**4.** Copolymère de propylène selon l'une quelconque des revendications précédentes, lequel copolymère de propylène présente

(a) un point de fusion Tm, déterminé par calorimétrie à balayage différentiel (DSC), situé dans la plage allant de 145 à 160°C,
et/ou
(b) une viscosité intrinsèque (IV) de la fraction soluble dans le xylène froid (XCS), déterminée conformément à la norme DIN ISO 1628/1 (dans la décaline à 135°C), située dans la plage allant de 1,2 à moins de 2,8 dl/g.

**5.** Copolymère de propylène selon l'une quelconque des revendications précédentes, lequel copolymère de propylène présente un indice de fluage $MFR_2$ (230°C), mesuré conformément à la norme ISO 1133, situé dans la plage allant de 0,5 à 15,0 g/10 min.

**6.** Copolymère de propylène selon l'une quelconque des revendications précédentes, lequel copolymère de propylène présente

(a) un module de flexion, mesuré conformément à la norme ISO 178, ne dépassant pas 350 MPa,
et/ou
(b) un voile avant stérilisation, déterminé conformément à la norme ASTM D 1003-07, inférieur à 35 %,
et/ou
(c) un voile après stérilisation, déterminé conformément à la norme ASTM D 1003-07, inférieur à 55 %.

**7.** Copolymère de propylène selon l'une quelconque des revendications précédentes, lequel copolymère de propylène est un copolymère de propylène hétérophasique (RAHECO) comprenant une matrice (M) et un copolymère de propylène élastomère (E) dispersé dans ladite matrice (M), dans lequel ladite matrice (M) est un copolymère de propylène statistique (R-PP).

**8.** Copolymère de propylène selon la revendication 7, dans lequel le rapport en poids entre la matrice (M) et le copolymère de propylène élastomère (E) est de 50/50 à 80/20.

**9.** Copolymère de propylène selon la revendication 7 ou 8, dans lequel

(a) la teneur en comonomère du copolymère de propylène statistique (R-PP) est située dans la plage allant de 4,0 à 15,0 % en poids, telle que mesurée par FT-IR étalonnée avec une RMN-$^{13}$C,
et/ou
(b) le copolymère de propylène satisfait en outre à l'inégalité (II) :

$$\frac{\text{Co (total)}}{\text{Co (RPP)}} \geq 0{,}9$$

dans laquelle

Co (total) est la teneur en comonomère [% en poids] du copolymère de propylène,
Co (RPP) est la teneur en comonomère [% en poids] du copolymère de propylène statistique (R-PP),

et/ou
(c) le copolymère de propylène statistique (R-PP) présente une fraction soluble dans le xylène froid (XCS), déterminée conformément à la norme ISO 16152, située dans la plage allant de 20,0 à 45,0 % en poids.

**10.** Copolymère de propylène selon l'une quelconque des revendications 7 à 9, dans lequel le copolymère de propylène statistique (R-PP) comprend au moins deux fractions différentes, une première fraction de copolymère de propylène statistique (R-PP1) et une deuxième fraction de copolymère de propylène statistique (R-PP2), dans lequel en outre

(a) le rapport en poids entre la première fraction de copolymère de propylène statistique (R-PP1) et la deuxième fraction de copolymère de propylène statistique (R-PP2) est de 20/80 à 80/20,
et/ou
(b) la première fraction de copolymère de propylène statistique (R-PP1) présente une teneur en comonomère située dans la plage allant de 0,5 à 5,0 % en poids, telle que mesurée par FT-IR étalonnée avec une RMN-$^{13}$C,
et/ou
(c) la deuxième fraction de copolymère de propylène statistique (R-PP2) a une teneur en comonomère située dans la plage allant de 7,0 à 20,0 % en poids, telle que mesurée par FT-IR étalonnée avec une RMN-$^{13}$C.

**11.** Copolymère de propylène selon l'une quelconque des revendications 7 à 10, dans lequel le copolymère de propylène élastomère (E) présente une teneur en comonomère, déterminée par FT-IR étalonnée avec une RMN-$^{13}$C, située dans la plage allant de 10,0 à 20,0 % en poids.

**12.** Film comprenant un copolymère de propylène selon l'une quelconque des revendications précédentes.

**13.** Procédé pour la préparation d'un copolymère de propylène selon l'une quelconque des revendications précédentes,

lequel procédé est un procédé de polymérisation séquentielle en présence d'un système catalyseur comprenant, en tant que composant, (i) un procatalyseur de Ziegler-Natta qui contient un produit de trans-estérification d'un alcool inférieur et d'un ester phtalate, comprenant les étapes

(a) de polymérisation, dans un premier réacteur (R1),
de propylène et
de l'éthylène et/ou une $\alpha$-oléfine en C4 à C12,
ce qui donne une première fraction de polymère,
(b) de transfert de la première fraction de polymère dans un deuxième réacteur (R2),
(c) de polymérisation, dans ledit deuxième réacteur (R2) en présence de la première fraction de polymère,
de propylène et
de l'éthylène et/ou une $\alpha$-oléfine en C4 à C12,
ce qui donne une deuxième fraction de polymère, les première et deuxième fractions de polymère formant un premier mélange,
(d) de transfert dudit premier mélange dans un troisième réacteur (R3),
(e) de polymérisation, dans ledit troisième réacteur (R3) en présence du premier mélange,
de propylène et
de l'éthylène et/ou une $\alpha$-oléfine en C4 à C12,
ce qui donne une troisième fraction de polymère, la troisième fraction de polymère et le premier mélange formant un deuxième mélange,
(f) de transfert dudit deuxième mélange dans un quatrième réacteur (R4),
(g) de polymérisation, dans ledit quatrième réacteur (R4) en présence du deuxième mélange,
de propylène et
de l'éthylène et/ou une $\alpha$-oléfine en C4 à C12,
ce qui donne une quatrième fraction de polymère, la quatrième fraction de polymère et le deuxième mélange formant le copolymère de propylène,
(h) de retrait du copolymère de propylène du quatrième réacteur (R4), et
(i) éventuellement de soumission du copolymère de propylène à une viscoréduction.

**14.** Procédé selon la revendication 13, dans lequel la première fraction de polymère est le premier copolymère de propylène statistique (R-PP1), la deuxième fraction de polymère est le deuxième copolymère de propylène statistique (R-PP2), le premier mélange est le copolymère de propylène statistique (R-PP), et la troisième fraction de polymère et la quatrième fraction de polymère forment ensemble le copolymère de propylène élastomère (E).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008141934 A1
- EP 2319885 A1
- WO 2010149549 A1
- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A
- EP 591224 A

### Non-patent literature cited in the description

- Glossary of basic terms in polymer science. *IUPAC recommendations,* 1996
- IR-Spektroskopie für Anwender. WILEY-VCH, 1997
- Validierung in der Analytik. WILEY-VCH, 1997